# EUROPÄISCHE PATENTSCHRIFT

(11) **EP 1 632 042 B1**
(45) Veröffentlichungstag und Bekanntmachung des Hinweises auf die Patenterteilung: **21.02.2007**
(21) Anmeldenummer: 04735004.6
(22) Anmeldetag: 27.05.2004
(51) Int. Cl.: H04B 15/02

(54) **VORRICHTUNG ZUM ABSORBIEREN DES RAUSCHENS**
DEVICE FOR ABSORBING NOISE
DISPOSITIF POUR ABSORBER UN BRUISSEMENT

(30) Priorität: 03.06.2003 DE 10326685
(43) Veröffentlichungstag der Anmeldung: 08.03.2006
(73) Patentinhaber: Würth Elektronik Eisos Gmbh & CO. KG, 74638 Waldenburg (DE)
(72) Erfinder: KONZ, Oliver, 74532 Ilshofen (DE)
(74) Vertreter: Patentanwälte Ruff, Wilhelm, Beier, Dauster & Partner
(86) Internationale Anmeldenummer: PCT/EP2004/005696
(87) Internationale Veröffentlichungsnummer: WO 2004/107613

(56) Entgegenhaltungen:
- US-A- 5 291 172
- US-A- 6 144 277
- US-B1- 6 559 748

## Beschreibung

Die Erfindung geht aus von einer Vorrichtung zum Absorbieren des elektrischen Rauschens auf einer Leitung.

Es ist bekannt, dass auf elektrischen Leitungen hochfrequente Störungen übertragen werden, die zu Störungen des Arbeitens von elektronischen Geräten führen können. Diese hochfrequenten unregelmäßigen Störungen werden als Rauschen bezeichnet.

Es ist ebenfalls bekannt, dass man um die Leitungen herum Ringe aus metallischem, magnetischem oder ähnlich wirkendem Material, insbesondere Ferrite, anordnen kann, die in der Lage sind, diese elektronische Störungen zu absorbieren. Bei den bislang üblichen Frequenzbereichen ist man davon ausgegangen, dass um die elektrischen Kabel herum ein geschlossener Ring aus Ferritmaterial vorhanden sein muss. Um die Vorrichtungen zum Absorbieren des Rauschens auch nachträglich anbringen zu können, ist es allgemein bekannt, solche Elemente zweiteilig auszubilden, von denen jedes Teil eine Nut aufweist. Die beiden Teile werden dann um das Kabel herum angeordnet und so gegeneinander beaufschlagt, dass einander zugewandte Flächen lückenlos aneinander anliegen. Es werden sogar Federbeaufschlagungen verwendet, um Luftspalte unbedingt zu vermeiden.

Es ist bereits eine Vorrichtung zum Absorbieren des elektrischen Rauschens auf Kabeln bekannt (US-B1-6559748). Diese Vorrichtung enthält ein Gehäuse mit zwei in dem Gehäuse angeordneten Teilelementen aus einem das elektrische Rauschen absorbierenden Material, die in geschlossenem Zustand des Gehäuses einen Durchgang für das Kabel zwischen einander bilden. In dem zweiteiligen Gehäuse sind federnde Elemente vorhanden, die die beiden aus Ferrit bestehenden Elemente gegeneinander andrücken. Ein Luftspalt soll vermieden werden.

Eine ähnliche Vorrichtung ist bekannt (US-A-5291172), bei der in geschlossenem Zustand die beiden Teilelemente aus Ferrit mit ihren einander zugewandten Flächen ebenfalls dicht aneinander anliegen.

Bei höheren Frequenzen und bei höheren Gleichströmen auf den Leitungen haben diese bekannten luftspaltlosen Einrichtungen zum Absorbieren des elektrischen Rauschens jedoch ihre Grenzen.

Der Erfindung liegt die Aufgabe zu Grunde, eine Einrichtung zum absorbieren des elektrischen Rauschens auf Leitungen zu schaffen, die auch bei höheren Frequenzen und bei einem hohen Gleichstromanteil zufrieden stellende Ergebnisse liefert.

Zur Lösung dieser Aufgabe schlägt die Erfindung eine Vorrichtung zum absorbieren des elektronischen Rauschens auf Leitungen mit den im Anspruch 1 genannten Merkmalen vor. Weiterbildungen der Erfindung sind Gegenstand von Unteransprüchen.

Bei dem Auftreten von Frequenzen im Bereich von ca. 100 bis 200 MHz wird durch den Luftspalt dafür gesorgt, dass die Impedanzen des Ferritelements vergrößert werden. Weiterhin tritt bei Strömen im Bereich von beispielsweise 4 Ampere der Effekt auf, dass das Ferritmaterial magnetisiert wird und in Sättigung übergeht. Dann kann aber keine Filterung der hochfrequenten Störungen mehr stattfinden. Auch dies wird durch das Vorsehen eines Luftspalts verhindert.

Der Luftspalt, der zwischen den beiden Teilelementen vorhanden ist, ist deutlich kleiner als der Durchmesser des Durchgangs für das Kabel und auch deutlich kleiner als das Kabel selbst, so dass der Aufbau aus zwei sich ergänzenden Teilelementen nach wie vor sinnvoll ist.

Um das Anbringen einer von der Erfindung vorgeschlagenen Vorrichtung an einem Kabel zu erleichtern, kann erfindungsgemäß in Weiterbildung vorgesehen sein, dass das Gehäuse aus zwei Teilschalen aufgebaut ist, in deren jeder ein Teilelement aus dem das Rauschen absorbierenden Material untergebracht ist. Die Vorrichtung kann dann so hergestellt und vertrieben werden, dass in jeder Teilschale des Gehäuses ein Teilelement aus dem das Rauschen absorbierenden Material untergebracht ist. An Ort und Stelle können dann zwei Teilschalen zusammengesetzt werden, was mit einfachen Mitteln geschehen kann, zu deren Benutzung kein Werkzeug erforderlich ist.

Es ist denkbar, beide Teilschalen und beide Teilelemente identisch auszubilden und dem Monteur eine entsprechend große Zahl von Elementen zur Verfügung zu stellen.

Es ist in Weiterbildung der Erfindung aber auch möglich, dass die beiden Teilschalen des Gehäuses durch ein Folienscharnier miteinander verbunden sind. Dann handelt es sich bei der Vorrichtung um ein einzelnes händzuhabendes Teil, so dass nicht die Gefahr des Verbindens zweier nicht zueinander gehörender Bauteile besteht.

Es ist möglich, die beiden Teilschalen des Gehäuses, seien sie nun durch ein Folienscharnier miteinander verbunden oder nicht, in angebrachtem Zustand beispielsweise durch ein außen herum geführtes Klebeband miteinander zu verbinden oder aneinander zu verriegeln. Besonders sinnvoll ist es jedoch, wenn die Vorrichtung eine Schließeinrichtung aufweist, die eine Rastzunge an der einen Teilschale und eine Rastausnehmung an der anderen Teilschale aufweisen kann, wobei die Rastausnehmung zusammen mit der Rastzunge die Schließeinrichtung bildet. Beispielsweise kann die Rastzunge einen Vorsprung aufweisen, der hinter einen Hinterschnitt der Rastausnehmung eingreift.

Die Rastzunge kann beispielsweise an einer Randkante des Gehäuses angeordnet sein, also insbesondere an der Stelle, wo eine Trennebene zwischen den beiden zusammengesetzten Gehäuseteilschalen vorhanden ist.

Um einen Höhenausgleich bei der Schließung des Gehäuses für den Ausgleich unterschiedlicher Dicken des Luftspalts zu ermöglichen, kann erfindungsgemäß vorgesehen sein, dass die Gehäusewand einer Teilschale beidseits neben der Rastzunge oder neben einem sonstigen die Schließeinrichtung bildenden Element Einschnitte aufweist. Dadurch ergibt sich eine gewisse Nachgiebigkeit der Schließeinrichtung. Insbesondere kann vorgesehen sein, dass die Einschnitte bis über eine Gehäuseecke reichen, also bis zum Boden der entsprechenden Teilschale. Je nachdem, wie weit die Einschnitte reichen, erfolgt eine mehr oder weniger starke Nachgiebigkeit der Schließeinrichtung.

Das eingangs erwähnte Abstandselement, das den Luftspalt in seiner Größe definiert, kann beispielsweise in Weiterbildung der Erfindung an dem Gehäuse angeformt sein, insbesondere an einer Teilschale. Es handelt sich also nicht um ein getrenntes Element. Beispielsweise kann das Abstandselement ein kurzes schmales Band sein, das an dem Gehäuse angeformt ist. Es kann beispielsweise eine solche Formgebung aufweisen, dass es sich beim Zusammensetzen bzw. Zusammenklappen des Gehäuses von selbst vor die entsprechende Fläche des einen Teilelements aus dem Ferrit legt.

Insbesondere kann zu Ermöglichung eines gleichmäßig schmalen Luftspalts vorgesehen sein, dass die Vorrichtung mehrere Abstandselemente aufweist. Insbesondere kann die Abstandseinrichtung derart ausgebildet sein, dass die beiden Teilelemente an einem Flächenpaar auf Abstand gehalten werden.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung einer bezorzugten Ausführungsform der Erfindung sowie anhand der Zeichnung. Hierbei zeigen:
- Figur 1: eine Aufsicht auf ein geöffnetes Gehäuse;
- Figur 2: die Stirnansicht der Anordnung der Figur 1;
- Figur 3: eine Seitenansicht der Vorrichtung der Figur 1;
- Figur 4: eine Stirnansicht des geschlossenen Gehäuses;
- Figur 5: eine der Figur 4 entsprechende Darstellung mit einer anderen Größe des Luftspalts;
- Figur 6: eine Seitenansicht des geschlossenen Gehäuses;
- Figur 7: einen Längsschnitt durch eine Teilschale mit einem darin angedeuteten Ferritelement.

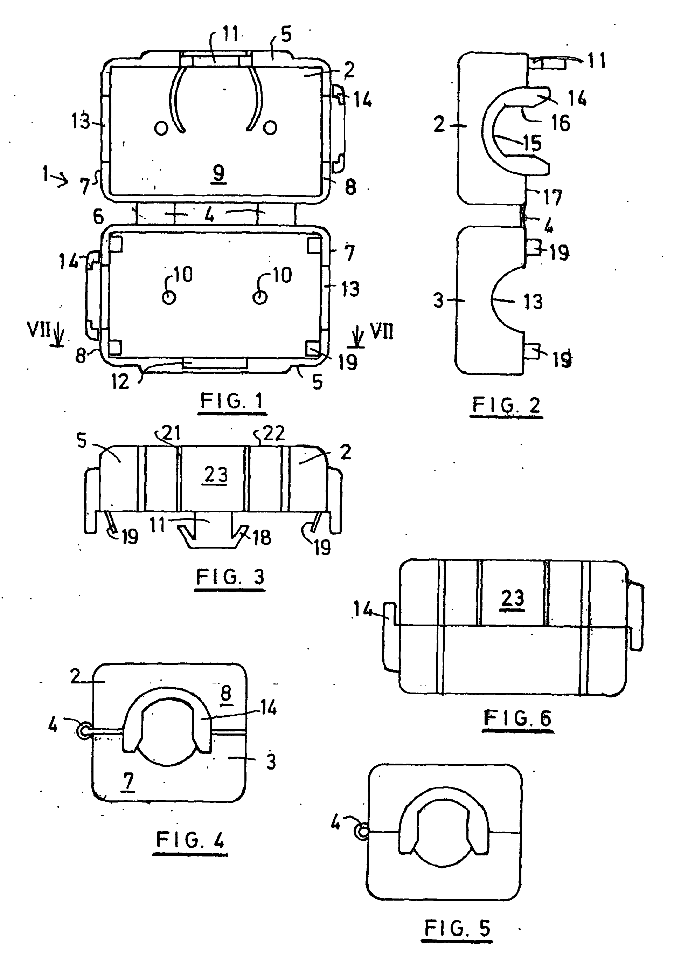

Figur 1 zeigt die Draufsicht auf das geöffnete Gehäuse 1, das aus zwei Teilschalen 2, 3 besteht, die im Bereich ihrer einander zugewandten Seiten mit Hilfe eines Folienscharniers 4 miteinander verbunden sind. Jede Teilschale weist etwa Quaderform auf mit zwei Längswänden 5, 6 und zwei Stirnwänden 7, 8. Die Längswände 5, 6 jeder Teilschale verlaufen parallel zueinander, ebenso die beiden Stirnwände 7, 8. Nach außen bzw. in Figur 1 nach unten abgeschlossen sind die beiden Teilschalen 2, 3 durch je einen Boden 9. Dieser Boden 9 weist längs seiner Mittellinie eine oder mehrere teilkugelförmige Erhebungen 10 auf, die zum Winkelausgleich der in die Teilschalen einzusetzenden Ferrite dienen. An der von der anderen Teilschale 3 abgewandten Längswand 5 der einen Teilschale 2 ist eine Rastzunge 11 angeformt, während die entsprechende gegenüberliegende Längswand 5 eine Rastausnehmung 12 aufweist, die in Längsrichtung der Teilschalen an der gleichen Stelle sitzt.

Beide Stirnwände 7, 8 weisen je eine mittige halbkreisförmige Ausnehmung 13 auf, die paarweise in zusammengesetztem Zustand ein etwa kreisförmiges Loch bilden.

An der Außenseite der einen Stirnwand 8 ist eine Klammer 14 angeformt, die einen Einschnitt 15 mit zwei parallelen Seitenwänden 16 bildet. Diese Klammer 14 dient dazu, das Gehäuse auf ein Kabel aufzuschieben, wobei die Kanten 16 sich am Kabel festlegen.

In Figur 1 sind die Kantenflächen 17 der beiden Teilschalen 2, 3 zu sehen, die jeweils in einer Ebene liegen und in zusammengesetztem Zustand des Gehäuses die Trennebene bilden. Diese Ebene ist in Figur 2 ebenfalls rechts zu sehen.

Figur 3 zeigt die Anordnung aus den beiden Teilschalen von oben in Figur 1. Vorne ist jetzt die Rastzunge 11 zu sehen, die aus der in der Trennebene 17 liegenden Kante der einen Gehäuseschale heraus ragt. Die Rastzunge 11 weist einen mittleren stabilen Abschnitt auf, an dessen Ende zwei zurück gewinkelte Zungen 18 angeformt sind. Diese sind dazu gedacht, hinter entsprechende Hinterschnitte der Rastausnehmung 12 einzugreifen.

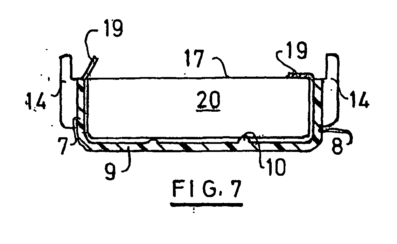

An der Innenseite der einen Teilschale 3, im dargestellten Beispiel der die Rastausnehmung 12 aufnehmenden Teilschale 3, sind im Bereich der Randkante 4 schmale Zungen 19 angeformt, die von der Innenseite der Stirnwände 7, 8 schräg nach oben ragen, siehe Figur 3. Diese schmalen Abstandselemente beziehungsweise Bänder bildenden Zungen 19 sind, siehe Figur 1, zwischen den Längsseitenwänden 5, 6 und der Ausnehmung 13 angeformt. Legt man in die Teilschalen die das elektrische Rauschen absorbierenden Elemente aus Ferrit ein, die nutenartige Durchgänge aufweisen, so liegen diese in Verlängerung der Ausnehmung 13. Im Bereich zwischen dem Rand der Ausnehmung 13 und der Innenseite der Längswände 5, 6 liegen die axialen Stirnflächen der beiden Teilelemente. Die Zungen 19 legen sich, wenn man das Gehäuse schließt, auf diese Stirnflächen auf. Dies ist in Figur 7 dargestellt. Figur 7 zeigt einen Längsschnitt durch eine Teilschale, etwa längs Linie VII-VII in Figur 1. An der Innenseite der Stirnwände 7, 8 sind die bereits erwähnten Zungen 19 angeformt. Links in Figur 7 ist die Position der Zungen 19 so dargestellt, wie sie bei offenem Gehäuse ist, nämlich schräg nach innen. Der Winkel zu der Trennebene 17 des Gehäuses, die mit der Stirnfläche des Ferritelements zusammenfällt, beträgt etwa 60 Grad. Wird nun das Gehäuse zusammen geklappt, was bedeutet, dass sich das andere Ferritelement 20 von oben nähert, so wird die Zunge 19 auf die entsprechende axiale Stirnfläche des Ferritelements 20 aufgelegt, siehe rechts in Figur 7. Da im dargestellten bevorzugten Ausführungsbeispiel vier solche Zungen 19 vorhanden sind, werden zwischen den beiden Ferritelementen 20 zwei Luftspalte gebildet, die eine exakte Dicke aufweisen, die der Dicke der Zungen 19 entspricht.

Die verschiedenen Dicken der Zungen 19 werden dadurch ausgeglichen, dass das Gehäuse mehr oder weniger weit geschlossen ist, siehe den Unterschied zwischen den Figuren 4 und 5. Unabhängig von den Toleranzen der Ferritelemente 20 ist der Luftspalt immer so bemessen, wie dies durch die Zungen 19 bestimmt ist. Wenn man Vorrichtungen für spezielle Zwecke mit unterschiedlichen Luftspalten haben will, müssen einfach die Zungen 19 bei der Herstellung des Gehäuses anderes dimensioniert werden.

Zur Verbesserung des Schließverhaltens dient eine weitere Ausbildung, die jetzt unter Bezugnahme auf die Figuren 1 und 3 noch beschrieben wird. Beidseits des Teiles der Seitenwand 5, die die Rastzunge 11 aufweist, sind Einschnitte 21 vorhanden, die senkrecht zur Trennebene durch die Seitenwand 5 hindurch verlaufen und sich über die in Figur 3 zu sehende Gehäuseecke 22 erstrecken. Sie setzen sich im Boden 9 der entsprechenden Teilschale 2 bis etwa in die Mitte fort, siehe die gebogenen Einschnitte 21 in Figur 1 oben. Sie sind im dargestellten Beispiel leicht gebogen, können auch geradlinig, schräg oder auch in anderer Weise geformt sein. Der zwischen den Einschnitten 21 verbleibende Teil 22 der Seitenwand und des Bodens 9 ist also gegenüber dem Rest dieser Teilschale federnd ausgebildet, so dass diese durch Verformung erzeugte Federkraft dazu dienen kann, die beiden Ferritelemente gegen die zwischen ihnen liegenden Zungen 19 anzudrücken. Auch dies dient dazu, einen genau definierten Luftspalt einzustellen.

## Patentansprüche

1. Vorrichtung zum Absorbieren des elektrischen Rauschens auf Kabeln, mit
1.1 einem Gehäuse (1),
1.2 zwei in dem Gehäuse (1) angeordneten Teilelementen (20) aus einem das elektrische Rauschen absorbierenden Material, die
1.3 in geschlossenem Zustand des Gehäuses (1) einen Durchgang für das Kabel zwischen einander bilden,
**gekennzeichnet durch**
1.4 mindestens ein Abstandselement, das
1.5 zwischen zwei einander zugewandten Flächen der beiden Teilelemente (20) angeordnet werden kann.

2. Vorrichtung nach Anspruch 1, bei der das Gehäuse (1) aus zwei Teilschalen (2, 3) aufgebaut ist, in deren jeder ein Teilelement (20) aus dem das Rauschen absorbierenden Material untergebracht ist.

3. Vorrichtung nach Anspruch 1 oder 2, mit einem Höhenausgleich zum Ausgleich unterschiedlicher Dicken des mindestens einen Abstandselements.

4. Vorrichtung nach Anspruch 3, bei der beide Teilschalen (2, 3) durch ein Folienscharnier (4) miteinander verbunden sind.

5. Vorrichtung nach einem der vorhergehenden Ansprüche, mit einer Schließeinrichtung, die eine Rastzunge (11) an der einen Teilschale (2) und eine Rastausnehmung (12) an der anderen Teilschale (3) aufweist.

6. Vorrichtung nach Anspruch 5, bei der die Rastzunge (11) an einer Kante des Gehäuses angeordnet ist.

7. Vorrichtung nach Anspruch 5 oder 6, bei der die Gehäusewand (5) beidseits neben der Rastzunge (11) Einschnitte (21) aufweist.

8. Vorrichtung nach Anspruch 7, bei der die Einschnitte (21) bis über die Gehäuseecke (22) reichen.

9. Vorrichtung nach einem der vorhergehenden Ansprüche, bei der das Abstandselement an dem Gehäuse (1), insbesondere einer Teilschale (3), angeformt ist.

10. Vorrichtung nach einem der vorhergehenden Ansprüche, bei der das Abstandselement ein kurzes schmales Band ist.

11. Vorrichtung nach einem der vorhergehenden Ansprüche, mit mehreren Abstandselementen.

12. Vorrichtung nach einem der vorhergehenden Ansprüche, bei der das Abstandselement derart ausgebildet ist, dass die beiden Teilelemente (20) an einem Flächenpaar auf Abstand gehalten werden.

## Claims

1. A device for absorbing electrical noise on cables having
1.1 a housing (1),
1.2 two components (20) arranged within the housing (1) and fabricated from a material that absorbs electrical noise, which
1.3 form between them a passageway for a cable when the housing (1) is closed, **characterized in that**
1.4 at least one spacer that
1.5 may be arranged between facing surfaces of the two parts (20), is provided.

2. A device according to Claim 1, wherein the housing (1) is assembled from a pair of half-shells (2, 3), each of which accommodates within it a component (20) fabricated from a material that absorbs electrical noise.

3. A device according to Claim 1 or Claim 2 having means for compensating heights for various thicknesses of at least one spacer.

4. A device according to Claim 3, wherein the pair of half-shells (2, 3) are joined with one another by means of a foil hinge (4).

5. A device according to one of the preceding claims having a latching mechanism that has a tab (11) on one half shell (2) and a recess (12) on the other half shell (3).

6. A device according to Claim 5, wherein the tab (11) is arranged on an edge of the housing.

7. A device according to Claim 5 or Claim 6, wherein the wall (5) of the housing has incisions (21) on either side of the tab (11).

8. A device according to Claim 7, wherein the incisions (21) extend beyond the edge (22) of the housing.

9. A device according to any of the preceding claims, wherein the spacer is formed on the housing (1), in particular on a half shell (3).

10. A device according to any of the preceding claims, wherein the spacer is a short, narrow strip.

11. A device according to any of the preceding claims having several spacers.

12. A device according to any of the preceding claims, wherein the spacer is configured such that a gap will be maintained between pairs of facing surfaces of the two parts (20).

## Revendications

1. Dispositif destiné à absorber le bruit électrique sur des câbles, comprenant
1.1 un boîtier (1),
1.2 deux éléments partiels (20) disposés dans le boîtier (1), constitués d'un matériau absorbant le bruit électrique, qui,
1.3 à l'état fermé du boîtier (1), forment entre eux un passage pour le câble,
**caractérisé par**
1.4 au moins un élément d'écartement qui
1.5 peut être disposé entre deux surfaces, tournées l'une vers l'autre, des deux éléments partiels (20).

2. Dispositif selon la revendication 1, dans lequel le boîtier (1) est constitué de deux coques partielles (2, 3), dans chacune desquelles est placé un élément partiel (20) constitué du matériau absorbant le bruit.

3. Dispositif selon la revendication 1 ou 2, comprenant un dispositif de compensation en hauteur destiné à compenser différentes épaisseurs de l'au moins un élément d'écartement.

4. Dispositif selon la revendication 3, dans lequel les deux coques partielles (2, 3) sont raccordées entre elles par une charnière à membrane (4).

5. Dispositif selon l'une quelconque des revendications précédentes, comprenant un dispositif de fermeture présentant une languette d'encliquetage (11) sur l'une des coques partielles (2) et un évidement d'encliquetage (12) sur l'autre coque partielle (3).

6. Dispositif selon la revendication 5, dans lequel la languette d'encliquetage (11) est disposée sur un bord du boîtier.

7. Dispositif selon la revendication 5 ou 6, dans lequel la paroi du boîtier (5) présente des encoches (21) des deux côtés, à côté de la languette d'encliquetage (11).

8. Dispositif selon la revendication 7, dans lequel les encoches (21) vont jusqu'au-delà du coin du boîtier (22).

9. Dispositif selon l'une quelconque des revendications précédentes, dans lequel l'élément d'écartement est formé sur le boîtier (1), notamment sur une coque partielle (3).

10. Dispositif selon l'une quelconque des revendications précédentes, dans lequel l'élément d'écartement est une courte bande étroite.

11. Dispositif selon l'une quelconque des revendications précédentes, comprenant plusieurs éléments d'écartement.

12. Dispositif selon l'une quelconque des revendications précédentes, dans lequel l'élément d'écartement est exécuté de telle manière que les deux éléments partiels (20) sont maintenus à écart sur une paire de surfaces.
